# EUROPEAN PATENT APPLICATION

(11) **EP 4 717 363 A2**
(43) Date of publication of application: **01.04.2026**
(21) Application number: 25204445.8
(22) Date of filing: 24.09.2025
(51) Int. Cl.: B04C 5/28, B01D 45/16, B01D 46/12, B01D 50/20, B04C 9/00, B04C 5/04, B04C 5/185, B04C 5/24, A47L 9/16

(54) **CYCLONE SEPARATOR, PURIFIER AND LASER PROCESSING SYSTEM**

(30) Priority: 27.09.2024 CN 202422374718 U; 27.09.2024 CN 202422391764 U; 27.09.2024 CN 202422375162 U
(71) Applicant: Makeblock Co., Ltd., Shenzhen Guangdong 518055 (CN)
(72) Inventor: YUAN, Linfeng, Shenzhen, 518055 (CN); WANG, Liang, Shenzhen, 518055 (CN); WANG, Hongji, Shenzhen, 518055 (CN)
(74) Representative: Murgitroyd & Company

(57) **Abstract**

Disclosed are a cyclone separator, a purifier, and a laser processing system. The cyclone separator includes a base and a cyclone module. The cyclone module includes a bracket and at least two cyclone structures connected to the bracket, and the bracket and the base are configured to enclose and form at least two isolated separation chambers and at least two air inlet passages. The base and/or the bracket are provided with a cyclone inlet, an end of each air inlet passage communicates with the cyclone inlet, and the other end of each air inlet passage communicates with at least one of the separation chambers. Each cyclone structure is located in one of the separation chambers. Technical solutions of the present invention reduce a cleaning frequency of the cyclone separator.

## Description

### TECHNICAL FIELD

The present invention relates to the field of air purification technologies, and in particular, to a cyclone separator, a purifier, and a laser processing system.

### BACKGROUND

In some processing operations, such as a laser processing or a textile printing and dyeing operation, smoke, dust, and odors are easily generated, thereby causing environmental pollution and even being harmful to human health.

### SUMMARY

A main objective of the present invention is to provide a cyclone separator, aiming at reducing a cleaning frequency required for the cyclone separator.

To achieve the above objective, in a first aspect, the present invention provides a cyclone separator. The cyclone separator includes a base and a cyclone module. The cyclone module includes a bracket and at least two cyclone structures connected to the bracket, and the bracket and the base are configured to enclose and form at least two isolated separation chambers and at least two air inlet passages. The base and/or the bracket are provided with a cyclone inlet, an end of each air inlet passage communicates with the cyclone inlet, and the other end of each air inlet passage communicates with at least one of the separation chambers. Each cyclone structure is located in one of the separation chambers.

Optionally, the cyclone structure includes at least two cyclone cylinders arranged side by side, a cyclone chamber is formed in the cyclone cylinder, the cyclone cylinder is provided with an airflow inlet communicating with the separation chamber and the cyclone chamber, and the bracket is provided with airflow outlets communicating with the cyclone chamber. Further, an axis of the cyclone cylinder is parallel to a first direction, and the at least two separation chambers are arranged sequentially in a second direction intersecting with the first direction.

Optionally, the cyclone inlet is located on a side of the at least two separation chambers in the second direction, the at least two air inlet passages are located on two opposite sides of the separation chamber in a third direction, respectively, and the third direction intersects with the first direction and the second direction.

Optionally, the cyclone separator also includes a top cover. The top cover is disposed on the bracket and located outside the separation chamber, the top cover and the bracket enclose to form an air outlet chamber, and the airflow outlets communicate with the air outlet chamber; and the base is provided with a cyclone outlet, and the bracket is provided with an air passage hole communicating with the cyclone outlet and the air outlet chamber; further, an axis of the cyclone cylinder is parallel to a first direction, and the top cover and the base are disposed on two opposite sides of the bracket in the first direction, respectively; and the cyclone outlet penetrates through the base in the first direction.

Optionally, the cyclone separator also includes at least two upper covers. The at least two upper covers are disposed in the air outlet chamber, and each upper cover is disposed corresponding to one of the cyclone structures and covers one of the airflow outlets; and the at least two upper covers are provided with at least two first openings and at least two protruding rings, respectively, each first opening is disposed corresponding to one of the airflow outlets, an end of each protruding ring surrounds one of the first openings, and the other end of each protruding ring passes through the corresponding airflow outlet and is inserted into the corresponding cyclone chamber; and in a direction perpendicular to a first direction, a cross-sectional area of the protruding ring is less than a cross-sectional area of the cyclone cylinder.

Optionally, in the base is provided with the cyclone inlet, and is provided with an airflow guide portion in an area corresponding to the cyclone inlet, and in a direction from the cyclone inlet towards the airflow guide portion, a cross-sectional dimension of the airflow guide portion gradually increases and the airflow guide portion extends towards the two adjacent air inlet passages to guide an airflow to divert into the two adjacent air inlet passages; further, the two adjacent air inlet passages respectively include adjacent passage walls close to each other, the two adjacent passage walls are connected to each other at an end thereof close to the cyclone inlet, and are arranged at intervals relative to the cyclone inlet; and the airflow guide portion is protrudingly disposed at a joint of the two adjacent passage walls.

Optionally, the at least two isolated separation chambers include a first separation chamber and a second separation chamber, and the first separation chamber is closer to the cyclone inlet than the second separation chamber; and the at least two air inlet passages include a first air inlet passage and a second air inlet passage. The first air inlet passage surrounds a portion of the first separation chamber and communicates with a side of the first separation chamber close to the second separation chamber. The second air inlet passage surrounds a portion of the first separation chamber and communicates with a side of the second separation chamber close to the first separation chamber.

In a second aspect, embodiments of the present invention also provide a purifier, the purifier includes a casing, a filter element, and the aforementioned cyclone separator. The casing is provided with an air duct, and an air inlet and an air outlet communicating with the air duct. The filter element and the cyclone separator are disposed in the air duct.

Optionally, the purifier also includes: a filter element assembly. The filter element assembly is disposed in the air duct and is located between the air inlet and the air outlet, and the filter element assembly includes at least one filter element. The cyclone separator is located between the air inlet and the air outlet, and is located upstream of the at least one filter element. Preferably, the filter element assembly includes a primary filter element, a medium efficiency filter element, an activated carbon filter element, a carbon-sandwiched cloth filter element and a high efficiency filter element, and the primary filter element, the medium efficiency filter element, the activated carbon filter element, the carbon-sandwiched cloth filter element and the high efficiency filter element are sequentially arranged along an air flow direction of the air duct.

Optionally, the cyclone separator includes a first surface and a second surface arranged opposite to each other in an air flow direction of the air duct, and the cyclone separator also includes a cyclone side wall connecting the first surface and the second surface. The cyclone side wall is provided with a cyclone inlet, and the second surface is provided with a cyclone outlet.

Optionally, the purifier also includes a fan. The fan is disposed in the air duct, and is located downstream of the filter element assembly and cyclone separator. The fan includes a first wall surface and a fan side wall, the first wall surface and the second surface are arranged opposite to each other, and the fan side wall is connected to the first wall surface; and the first wall surface is provided with a fan inlet, and the fan side wall is provided with a fan outlet.

Optionally, the purifier also includes: a filter element assembly, the filter element assembly being disposed in the air duct, the filter element assembly including a front filter element component and a rear filter element component sequentially arranged along an air flow direction of the air duct, the front filter element component and the rear filter element component including at least one filter element respectively, and a filter hole of the filter element in the front filter element component being greater than a filter hole of the filter element in the rear filter element component; and a sealing structure, the sealing structure being at least located between every two adjacent filter elements, and being annular in shape to form a first passage communicating with the two adjacent filter elements.

Optionally, the filter element has an air inlet side and an air outlet side arranged opposite to each other, and the sealing structure includes: a first sealing member, the first sealing member is annular in shape and is disposed on the air inlet side; and a second sealing member, the second sealing member is in an annular shape and is disposed on the air outlet side, and the second sealing member and the first sealing member located at the two adjacent filter elements abut against each other and cooperatively enclose and form the first passage; and preferably, in the air flow direction of the air duct, a thickness of the first sealing member differs from a thickness of the second sealing member.

Optionally, the cyclone separator is located between the air inlet and the filter element adjacent to the air inlet; the air inlet side of the filter element adjacent to the air inlet is provided with the first sealing member, and the first sealing member adjacent to the air inlet abuts against the cyclone separator to enclose and form a third passage communicating with the cyclone separator and the filter element; and the sealing structure also includes a third sealing member, the third sealing member is annular in shape and is provided on a side of the cyclone separator facing to the filter element, the third sealing member abuts against the first sealing member adjacent to the cyclone separator to enclose and form a fourth passage communicating with the cyclone separator and the third passage.

In a third aspect, the embodiments of the present invention also provide a laser processing system. The laser processing system includes a laser processing device, and the aforementioned cyclone separator or the aforementioned purifier. The laser processing device comprises a main body and a laser head, and the main body is provided with a processing chamber and an exhaust port communicating with the processing chamber.

According to the cyclone separator provided by the technical solution of the present invention, at least two separation chambers formed by the base enclosing with the bracket house are provided with at least two cyclone structures, so that the at least two cyclone structures performs particulate matter separation on an airflow entering from the cyclone inlet, thereby a space for accommodating the particulate matter is increased, which prevents rapid and excessive accumulation of the particulate matter in the cyclone separator, and thus a required cleaning frequency of the cyclone separator is reduced.

### BRIEF DESCRIPTION OF THE DRAWINGS

To more clearly illustrate technical solutions of embodiments of the present invention or the related art, drawings required to be used in the description of the embodiments or the related art will be briefly introduced below. Apparently, the drawings in the following description are some embodiments of the present invention. For those with ordinary skill in the art, other drawings may be obtained according to structures shown in these drawings without creative work.
FIG. 1 is a schematic structural diagram of a laser processing system provided by some embodiments of the present invention.
FIG. 2 is a schematic structural diagram of a purifier provided by some embodiments of the present invention.
FIG. 3 is a schematic structural diagram of a cyclone separator of a purifier provided by some embodiments of the present invention.
FIG. 4 is another schematic structural diagram of a cyclone separator of a purifier provided by some embodiments of the present invention.
FIG. 5 is an exploded structural diagram of a cyclone separator provided by some embodiments of the present invention.
FIG. 6 is a partially exploded structural diagram of a cyclone separator provided by some embodiments of the present invention.
FIG. 7 is another partially exploded structural diagram of a cyclone separator provided by some embodiments of the present invention.
FIG. 8 is a partially exploded structural diagram of a cyclone separator provided by some embodiments of the present invention.
FIG. 9 is a schematic structural diagram of a cyclone module of a cyclone separator provided by some embodiments of the present invention.
FIG. 10 is another schematic structural diagram of a cyclone module of a cyclone separator provided by some embodiments of the present invention.
FIG. 11 is a schematic structural diagram of a base of a cyclone separator provided by some embodiments of the present invention.
FIG. 12 is a cross-sectional view of a cyclone separator provided by some embodiments of the present invention.
FIG. 13 is a partial cross-sectional view of a cyclone separator provided by some embodiments of the present invention.
FIG. 14 is a schematic structural diagram of a laser processing system provided by some embodiments of the present invention.
FIG. 15 is a schematic structural diagram of a purifier provided by some embodiments of the present invention.
FIG. 16 is a schematic structural diagram of a casing of a purifier provided by some embodiments of the present invention.
FIG. 17 is a schematic diagram of an assembly structure of a filter element assembly, a cyclone separator and a fan in a purifier provided by some embodiments of the present invention.
FIG. 18 is a schematic structural diagram of a purifier of a laser processing system provided by some embodiments of the present invention.
FIG. 19 is a schematic diagram of an assembly structure of a filter element assembly of a purifier in a laser processing system provided by some embodiments of the present invention.
FIG. 20 is a schematic diagram of an assembly structure of a portion of filter elements and a cyclone separator of a purifier in a laser processing system provided by some embodiments of the present invention.
FIG. 21 is a schematic diagram of an assembly structure of a portion of filter elements and a casing of a purifier in a laser processing system provided by some embodiments of the present invention.

The achievement of objectives of the present invention, and functional characteristics and advantages of the present invention will be further explained in conjunction with the embodiments and with reference to the drawings.

Reference numerals:
100. laser processing system; 10. laser processing device; 110. main body; 111. processing chamber; 112. air inlet;113. exhaust port; 13. laser head; 50. purifier; 51. casing; 511. air duct; 512. air inlet; 513. air outlet; 571d. through-hole; 57. cyclone separator; 57c. cyclone outlet; 57e. cyclone inlet; 571. cyclone module; 571a. separation chamber; 571a1. first separation chamber; 571a2. second separation chamber; 571b. air inlet passage; 571b1. first air inlet passage; 571b2. second air inlet passage; 571b3. adjacent passage wall; 514. installation port; 516. second side wall; 53. filter element assembly; 531a. primary filter element; 533. rear filter element component; 533b. carbon-sandwiched cloth filter element; 534. filter element; 537. air outlet side; 551. first passage; 552a. third passage; 553a. fifth passage; 554a. fourth passage; 590. movable wheel; 59. fan; 593. fan side wall; 57a. first surface; 591. first wall surface; 571c. air outlet chamber; 572. base; 572a. air inlet groove; 572b. separation groove; 572c. airflow guide portion; 573. bracket; 573a. first annular rib; 573b. positioning rib; 573c. second annular rib; 573d. air passage hole; 574. top cover; 574a. abutting rib; 575. upper cover; 575a. opening; 575b. protruding ring; 575c. positioning hole body; 577. cyclone structure; 578. cyclone cylinder; 578a. airflow inlet; 578b. cyclone chamber; 578c. airflow outlet; 5781. main cylinder; 5782. conical cylinder; 5783. side protruding portion; 70. connecting pipe; 515. first side wall; 517. insertion slot; 531. front filter element component; 531b. medium efficiency filter element; 533a. activated carbon filter element; 533c. high efficiency filter element; 535. air inlet side; 55. sealing structure; 552. first sealing member; 553. second sealing member; 554. third sealing member; 58. door body; 57d. cyclone side wall; 591a. fan inlet; 593a. fan outlet; 57b. second surface.

### DETAILED DESCRIPTION OF THE EMBODIMENTS

Technical solutions in the embodiments of the present invention will be clearly and completely described below with reference to drawings in the embodiments of the present invention. Apparently, the described embodiments are only a portion of the embodiments of the present invention, rather than all the embodiments. Based on the embodiments in the present invention, all other embodiments obtained by those with ordinary skill in the art without creative work shall fall within the protection scope of the present invention.

It should be noted that, all directional indications (such as upper, lower, left, right, front, rear...) in the embodiments of the present invention are only used for explaining a relative positional relationship and a movement between various components in a specific posture (as shown in the drawings). If the specific posture changes, the directional indications will also change accordingly.

In the present invention, unless otherwise explicitly specified and defined, terms such as "connected" and "fixed" should be understood broadly. For example, "fixed" is a fixed connection, a detachable connection, or an integrated connection; or it is a mechanical connection, an electrical connection, or a direct connection; or it is an indirect connection through an intermediate medium, or an internal communication between two elements or an interaction relationship between two elements, unless otherwise explicitly defined. For those with ordinary skill in the art, specific meanings of the above terms in the present invention are understood according to specific situations.

In the present invention, descriptions involving "first", "second", and on the like, are only for descriptive purposes and cannot be understood as indicating or implying relative importance or implicitly indicating the number of a technical feature indicated. Consequently, a technical feature defined with "first" or "second" may explicitly or implicitly include at least one such feature. The term "and/or" appearing throughout the specification means that it includes three alternative solutions. Taking "A and/or B" as an example, it includes a solution of A, or a solution of B, or a solution that satisfies both A and B. The technical solutions of various embodiments may be combined with each other, but it must be based on a premise that those with ordinary skill in the art can achieve it. When a combination of technical solutions results in mutual contradictions or cannot be achieved, it should be considered that such combination of the technical solutions does not exist and is not within the protection scope of the present invention.

Currently, in the related art, during the use of a cyclone separator, a filtration volume of the cyclone separator is relatively small, and dust accumulates quickly in the cyclone separator, resulting in more frequent cleaning of the dust in the cyclone separator.

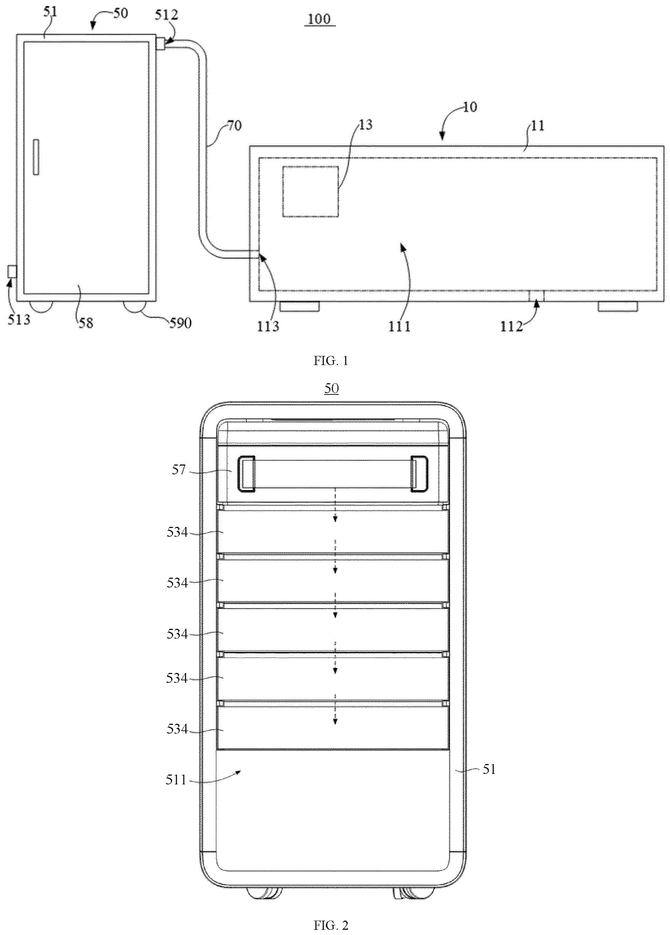

In view of the above problems, with reference to FIG. 1, FIG. 14, and FIG. 27, the present invention provides a laser processing system 100, which includes a laser processing device 10 and a purifier 50.

In some embodiments, the laser processing device 10 is a laser engraving machine, a laser cutting machine, or a laser welding machine, or the like. A type of the laser processing device 10 is not limited in the present invention, as long as it is a device that uses laser as a medium to process a workpiece to be processed. In some embodiments, the laser processing device 10 includes a main body 110 and a laser head 13, and the main body 110 is provided with a processing chamber 111, an air inlet 112 communicating with the processing chamber 111, and an exhaust port 113 communicating with the processing chamber 111. The laser head 13 is disposed in the processing chamber 111 to emit a laser beam for processing a workpiece to be processed which is placed in the processing chamber 111. In some examples, the laser processing device 10 also includes a fan disposed on the main body 110 to drive an external airflow to enter through the air inlet 112 and then be discharged through the exhaust port 113. The fan is disposed in the processing chamber 111, the air inlet 112, or the exhaust port 113.

The purifier 50 is used for purifying processing exhaust gas generated by the laser processing device 10. In some examples, the purifier 50 is disposed outside the main body 110 to reduce a volume of the main body 110, and an air inlet 512 of the purifier communicates with the exhaust port 113. In some embodiments, the laser processing system 100 also includes a connecting pipe 70, an end of the connecting pipe 70 communicates with the exhaust port 113, and the other end of the connecting pipe 70 communicates with the purifier 50. To facilitate separate transportation and storage of the purifier 50 and the main body 110, in some embodiments, the connecting pipe 70 is detachably connected to the main body 110 and the purifier 50. In some embodiments, to simplify a disassembly and assembly processes, a detachable connection method between the connecting pipe 70 and the main body 110 and the purifier 50 is a snap-fit connection or a magnetic connection, or the like. To facilitate arrangement of the connecting pipe 70 in various locations, in some embodiments, the connecting pipe 70 is a flexible hose. In some embodiments, the purifier 50 is disposed directly in the exhaust port 113. In some embodiments, the purifier 50 is disposed in the processing chamber 111, and an air outlet 513 of the purifier 50 communicates with the exhaust port 113.

It may be understood that, the purifier 50 provided by the embodiments of the present invention may also be used in other processing devices that generate dust, smoke, and odors during processing, such as an inkjet printer (for example, a DTF (direct-to-film) printer or a UV (ultra-violet) printer).

The structure of the purifier 50 will be explained and described with reference to the drawings below.

With reference to FIG. 2, and FIG. 15 to FIG. 17, in an embodiment of the present invention, the purifier 50 includes a casing 51, a filter element 534, and a cyclone separator 57. The casing 51 is provided with an air duct 511, and an air inlet 512 and an air outlet 513 communicating with the air duct 511. The air inlet 512 is configured to communicate with the exhaust port 113. The filter element 534 and the cyclone separator 57 are disposed in the air duct 511.

The casing 51 forms a path for an airflow to flow in the purifier 50 through the air inlet 512, the air duct 511 and the air outlet 513. In some embodiments, the air inlet 512 directly communicates with the exhaust port 113 on the main body 110 as described above. In some embodiments, the air inlet 512 communicates with an end of the above connecting pipe 70 away from the exhaust port 113. Alternatively, the purifier 50 is disposed directly in the exhaust port 113 or the processing chamber 111 of the main body 110, and the air inlet 512 directly communicates with the processing chamber 111. In some examples, the airflow is driven by the fan disposed on the main body 110 as described above to flow in the purifier 50. In some embodiments, the purifier 50 includes the fan (for example, a second fan 90) to drive the airflow to flow more effectively, and the fan is disposed in the air duct 511, the air inlet 512, or the air outlet 513. When the purifier 50 is in a normal operation state with the ground as a reference, the air duct 511 inside the casing 51 is disposed to extend in a vertical direction, in other words, an air flow direction of the air duct 511 (as shown by a dashed arrow in FIG. 2) is from top to bottom or from bottom to top. In other embodiments, the air duct 511 inside the casing 51 is also disposed to extend in a horizontal direction. The air inlet 512 and the air outlet 513 are disposed at two ends of the casing 51 along an extending direction of the air duct 511, respectively, and are located on a same side of the casing 51, or adjacent two sides of the casing 51, or are disposed opposite to each other. Positions and shapes of the air inlet 512 and the air outlet 513 are not limited by the present invention. In some embodiments, a projection of the casing 51 in the vertical direction is a square or a rectangle to provide a regular shape, thereby convenience of processing and manufacturing the casing 51 is improved. The "square or rectangle" herein includes a case that a corner is not chamfered, as well as a case that an edge is rounded or chamfered. In other embodiments, the projection of the casing 51 in the vertical direction is a circle or other shapes, which is not limited in the present invention.

The filter element 534 is used for filtering components to be filtered in a processing exhaust gas which is generated by the laser processing device 10. The components to be filtered include particulate matter, harmful gases, or odors, or the like. In some embodiments, the number of the filter elements 534 is one, two, or more. In some implementations, the number of the filter elements 534 is two or more, and types of the filter elements 534 are at least partially different or all the same. For example, in some embodiments, the number of the filter elements 534 is five, which are a primary filter element, a medium efficiency filter element, an activated carbon filter element, a carbon-sandwiched cloth filter element, and a high efficiency filter element sequentially arranged along the air flow direction of the air duct 511. In some embodiments, the filter element 534 is a cube or a cuboid to provide a regular shape, thereby convenience of processing and manufacturing the filter element 534 is improved. The "a cube or a cuboid" herein includes a case that a corner is not chamfered, as well as a case that an edge is rounded or chamfered. In other embodiments, the filter element 534 is a cylinder or other shapes, which is not limited in the present invention. In order to improve compactness of distribution to reduce an overall volume of the purifier 50, in some embodiments, projection shapes of the casing 51, the air duct 511 and the filter element 534 are set to be the same in the air flow direction of the air duct 511.

The cyclone separator 57 is used for performing high-speed centrifugal separation and collection of particulate matter entrained in an airflow. In some embodiments, the number of the filter elements 534 is one as described above, and the cyclone separator 57 is located upstream or downstream of the filter element 534. In some embodiments, the number of the filter elements 534 is two or more as described above, and the cyclone separator 57 is located upstream of all the filter elements 534, or the cyclone separator 57 is located between two adjacent filter elements 534, so that the cyclone separator 57 is only located upstream of a portion of the filter elements 534. For example, the filter elements 534 include the primary filter element, the medium efficiency filter element, the activated carbon the filter element, the carbon-sandwiched cloth filter element and the high efficiency filter element as described above, and the cyclone separator 57 is disposed upstream of the primary filter element, or the cyclone separator 57 is disposed between the medium efficiency filter element and the activated carbon filter element, or the cyclone separator 57 is disposed downstream of all the filter elements 534. It can be seen that, the arrangement of the cyclone separator 57 and the filter element 534 in the air duct 511 is not limited by the present invention. In some embodiments, the number of cyclone separators 57 is one, two, or more. In some embodiments, the number of the cyclone separators 57 is two or more, and the at least two cyclone separators 57 are connected in series, in parallel, or in a combination of series and parallel.

In some embodiments, the cyclone separator 57 is applied directly in a laser processing device 10. The cyclone separator 57 is disposed outside the main body 110 and directly communicates with the exhaust port 113 on the main body 110, or the cyclone separator 57 is directly disposed in the exhaust port 113 or the processing chamber 111 of the main body and communicates with the processing chamber 111.

A detailed structure of the cyclone separator 57 will be explained and described with reference to the drawings below.

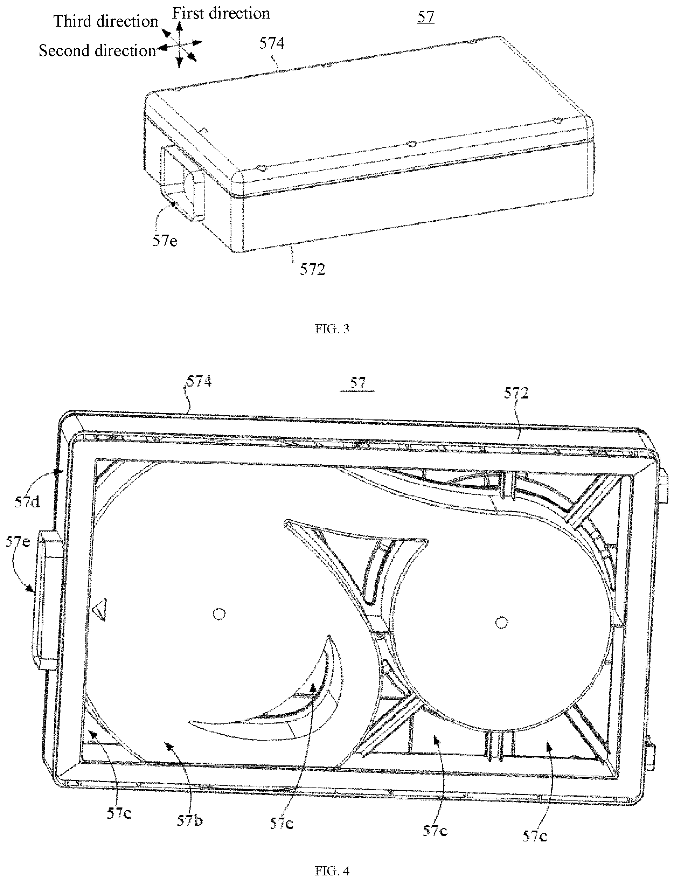

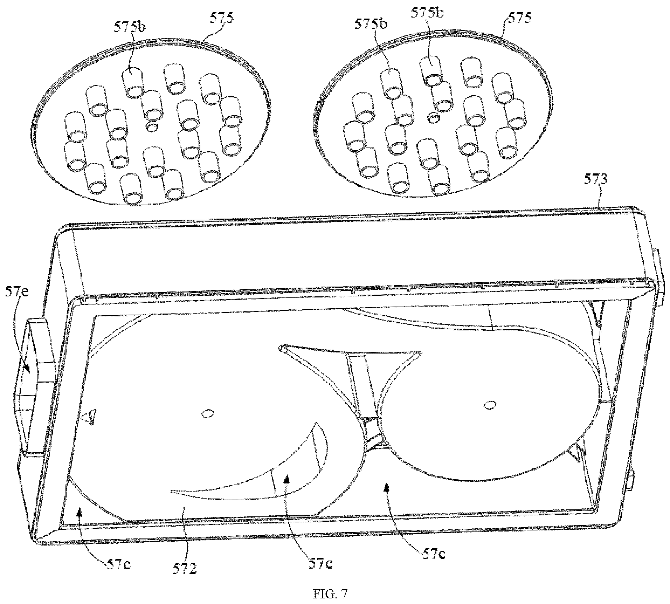

With reference to FIG. 3 to FIG. 12, in an embodiment of the present invention, the cyclone separator 57 includes a base 572 and a cyclone module 571. The cyclone module 571 includes a bracket 573 and at least two cyclone structures 577 connected to the bracket 573, and the bracket 573 and the base 572 are configured to enclose and form at least two isolated separation chambers 571a and at least two air inlet passages 571b. The base 572 and/or the bracket 573 are provided with a cyclone inlet 57e. An end of each air inlet passage 571b communicates with the cyclone inlet 57e, and the other end of each air inlet passage 571b communicates with at least one of the separation chambers 571a. Each cyclone structure 577 is located in one of the separation chambers 571a.

In some embodiments, each cyclone structure 577 includes at least two cyclone cylinders 578 arranged side by side, and a cyclone chamber 578b is formed in the cyclone cylinder 578. The cyclone cylinder 578 is provided with an airflow inlet 578a communicating with the separation chamber 571a and the cyclone chamber 578b, and the bracket 573 is provided with an airflow outlet 578c communicating with the cyclone chamber 578b.

The base 572 and the bracket 573 cooperate to form the separation chamber 571a and the air inlet passage 571b. In some embodiments, the base 572 is provided with a separation groove 572b and an air inlet groove 572a as described below, which, when covered by the bracket 573, are configured to enclose and form the separation chamber 571a and the air inlet passage 571b, respectively. In some embodiments, the bracket 573 is provided with the separation groove 572b and the air inlet groove 572a, which, when covered by the base 572, are configured to enclose and form the separation chamber 571a and the air inlet passage 571b, respectively. In some embodiments, both the base 572 and the bracket 573 are provided with the separation groove 572b and the air inlet groove 572a, which, when covered relative to each other, are configured to enclose and form the separation chamber 571a and the air inlet passage 571b, respectively. It can be seen that, structural types of the base 572 and the bracket 573 are not limited by the present invention, as long as the base 572 and the bracket 573 enclose and form the separation chamber 571a and the air inlet passage 571b.

In some embodiments, the cyclone inlet 57e is disposed on the base 572 or on the bracket 573, or is formed by the base 572 enclosing with the bracket 573. In some embodiments, when the cyclone separator 57 is in a normal operation state, an axis of the cyclone cylinder 578 is parallel to the vertical direction, and the cyclone inlet 57e is disposed on a side wall of the base 572 and/or the bracket 573 to enable an airflow to enter tangentially along a circumferential direction of the cyclone separator 57, thereby the airflow is better guided to rotate in the cyclone separator 57 and a flow velocity of the airflow is increased, and thus a separation effect of the cyclone separator 57 on the particulate matter entrained in the airflow is improved. In other embodiments, the cyclone inlet 57e is disposed on other walls of the base 572 and/or the bracket 573, and the separation chambers 571a are arranged in sequence in the horizontal direction or the vertical direction. In some embodiments, a projection of the separation chamber 571a in the vertical direction is a circle, so as to facilitate the airflow to rotate along a circumferential chamber wall of the separation chamber 571a after entering the separation chamber 571a, thereby making the airflow more evenly enter each cyclone cylinder 578 in the cyclone structure 577 located in the separation chamber 571a. To facilitate the airflow to enter into the separation chamber 571a along a tangential direction while improving the compactness of layout between the air inlet passage 571b and the separation chamber 571a, and reducing a size required for the cyclone inlet 57e, the air inlet passage 571b is disposed to extend along an arc.

In other embodiments, the air inlet passage 571b is disposed to extend along a straight line, a shape of the air inlet passage 571b is not limited by the present invention. Ends of the air inlet passage 571b that are close to each other are either interconnected or isolated. In some embodiments, the number of the air inlet passages 571b corresponds to the number of the separation chambers 571a, and an end of each air inlet passage 571b away from the cyclone inlet 57e communicates with one of the separation chambers 571a. In some embodiments, the number of the air inlet passages 571b is less than the number of the separation chambers 571a. For example, the number of the air inlet passages 571b is half the number of the separation chambers 571a, and the end of the air inlet passage 571b away from the cyclone inlet 57e is formed with two branches to communicate with two the separation chambers 571a, respectively.

In some embodiments, the cyclone structure 577 includes at least two cyclone cylinders 578 to perform high-speed rotation of an airflow to separate the particulate matter therefrom. The cyclone cylinder 578 includes a main cylinder 5781, a side protruding portion 5783 and a conical cylinder 5782. The side protruding portion 5783 is protrudingly disposed on an outer side of an end of the main cylinder 5781 and extends along a tangential direction of the main cylinder 5781 to form an airflow inlet 578a for tangentially intaking air. An end of the main cylinder 5781 close to the side protruding portion 5783 is set to be open and is connected to the bracket 573, and corresponds to the airflow outlet 578c. The conical cylinder 5782 is disposed at an end of the main cylinder 5781 away from the side protruding portion 5783, and an inner side of the conical cylinder 5782 communicates with an inner side of the main cylinder 5781 to collectively form the cyclone chamber 578b. Along a direction from the main cylinder 5781 towards the conical cylinder 5782, a cross-section of the conical cylinder 5782 gradually reduces.

In other embodiments, the cyclone cylinder 578 only includes the side protruding portion 5783 and the conical cylinder 5782, an end of the conical cylinder 5782 with a greater cross-sectional area is directly connected to the bracket 573, and the side protruding portion 5783 is disposed on the end of the conical cylinder 5782 with the greater cross-sectional area. In some examples, to improve arrangement compactness of the cyclone cylinder 578 and the separation chamber 571a, a plurality of the cyclone cylinders 578 are arranged in a circular array on a projection plane perpendicular to the vertical direction. The airflow outlet 578c communicates with a subsequent airflow passage through a cyclone outlet 57c disposed on the base 572 or a top cover 574 as described below, or directly communicates with the subsequent airflow passage. For example, the cyclone separator 57 is applied in the purifier 50 as described above, and the airflow outlet 578c directly communicates with the air duct 511 of a casing 51 of the purifier 50, or communicates with the air duct 511 through the cyclone outlet 57c.

According to the cyclone separator 57 provided by the present invention, at least two separation chambers 571a formed by the base 572 enclosing with the bracket 573 house are provided with at least two cyclone structures 577, so that the at least two cyclone structures 577 performs particulate matter separation on an airflow entering from the cyclone inlet 57e, thereby a space for accommodating the particulate matter is increased, which prevents rapid and excessive accumulation of the particulate matter in the cyclone separator 57, and thus a required cleaning frequency of the cyclone separator 57 is reduced.

A contact area with the airflow is also increased through the at least two cyclone structures 577, so that the particulate matter entrained in the airflow is separated more thoroughly and rapidly, thereby a separation effect and a separation efficiency of the airflow are improved. Additionally, upstream and downstream sections of the at least two cyclone structures 577 share a single set of airflow structure through which the airflow passes, so that a structure of the cyclone separator 57 is simplified. In the cyclone separator 57, the base 572 encloses with the bracket 573 to form the separation chamber 571a and the air inlet passage 571b, allowing the base 572 and the bracket 573 to be manufactured independently and conveniently, and then be assembled to form the separation chamber 571a and the air inlet passage 571b, thereby being convenient for processing and forming the separation chamber 571a and the air inlet passage 571b.

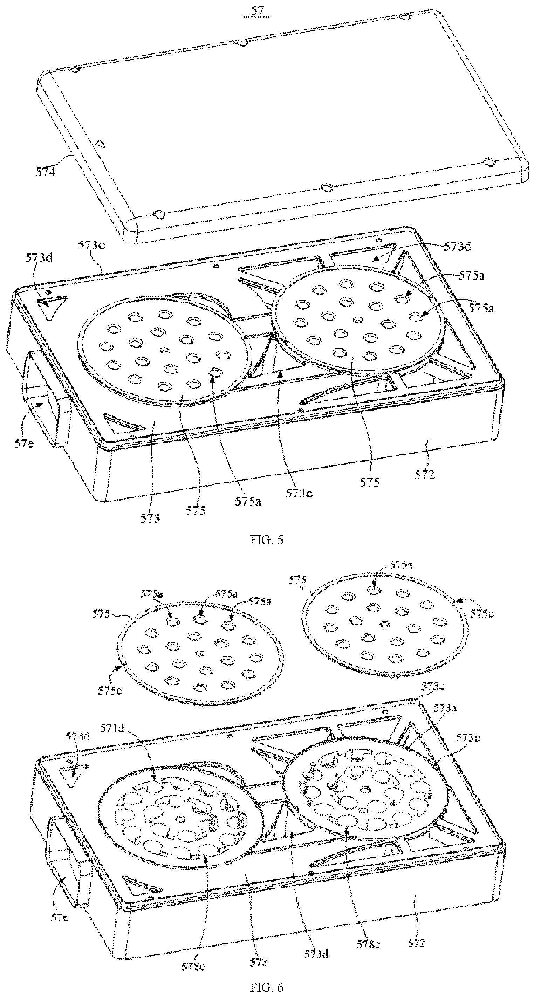

With reference to FIG. 5 to FIG. 10 and FIG. 12, in an embodiment of the present invention, the base 572 is provided with at least two isolated separation grooves 572b, a cyclone inlet 57e and at least two air inlet grooves 572a, an end of each air inlet groove 572a communicates with the cyclone inlet 57e, and the other end of each air inlet groove communicates with at least one of the separation grooves 572b. The bracket 573 covers openings of the air inlet groove 572a and the separation groove 572b and encloses with the air inlet groove 572a to form the air inlet passage 571b, and encloses with the separation groove 572b to form the separation chamber 571a.

In the present embodiment, the cyclone inlet 57e is disposed on the base 572, and the separation groove 572b and the air inlet groove 572a are disposed on the base 572 to form the separation chamber 571a and the air inlet passage 571b after being covered by the bracket 573, so that only the cyclone structure 577 needs to be disposed on the bracket 573. That is, the cyclone inlet 57e, the separation groove 572b and the air inlet groove 572a are disposed on the base 572, and the cyclone structure 577 is disposed on the bracket 573, so that structures on the base 572 and the bracket 573 are not overly complex, thereby being convenient for manufacturing the cyclone separator 57. In some examples, the separation groove 572b and the air inlet groove 572a are formed by recessing a surface of the base 572 facing the bracket 573. In some embodiments, a surrounding plate is protrudingly disposed on the surface of the base 572 facing the bracket 573, and the surrounding plate encloses with the surface of the base 572 facing the bracket 573 to form the separation groove 572b and the air inlet groove 572a. The bracket 573 is a flat plate structure and is connected to the cyclone structure 577 on a side facing the base 572.

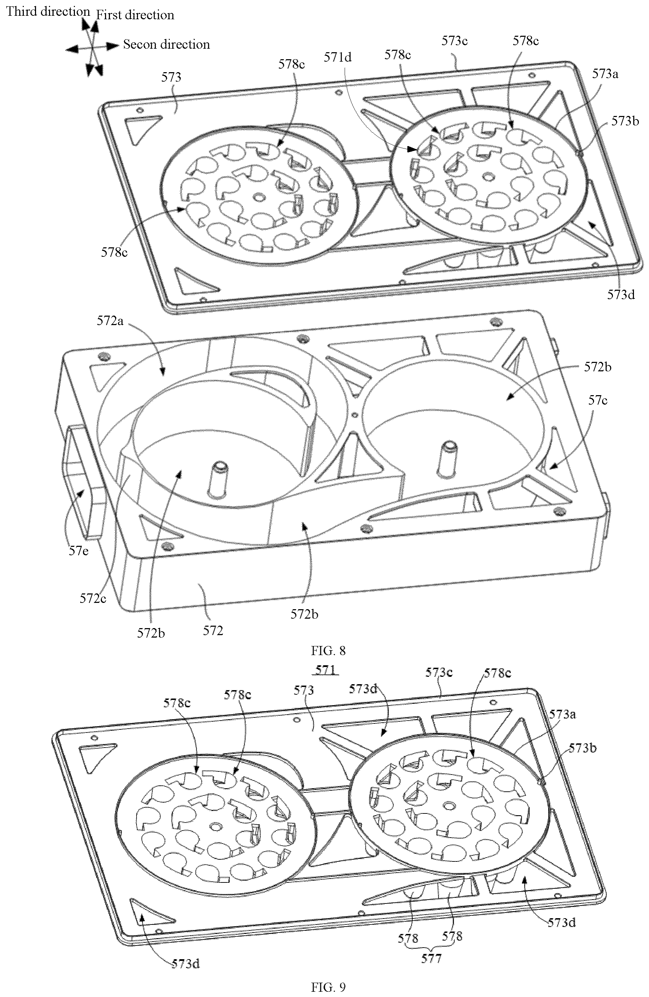

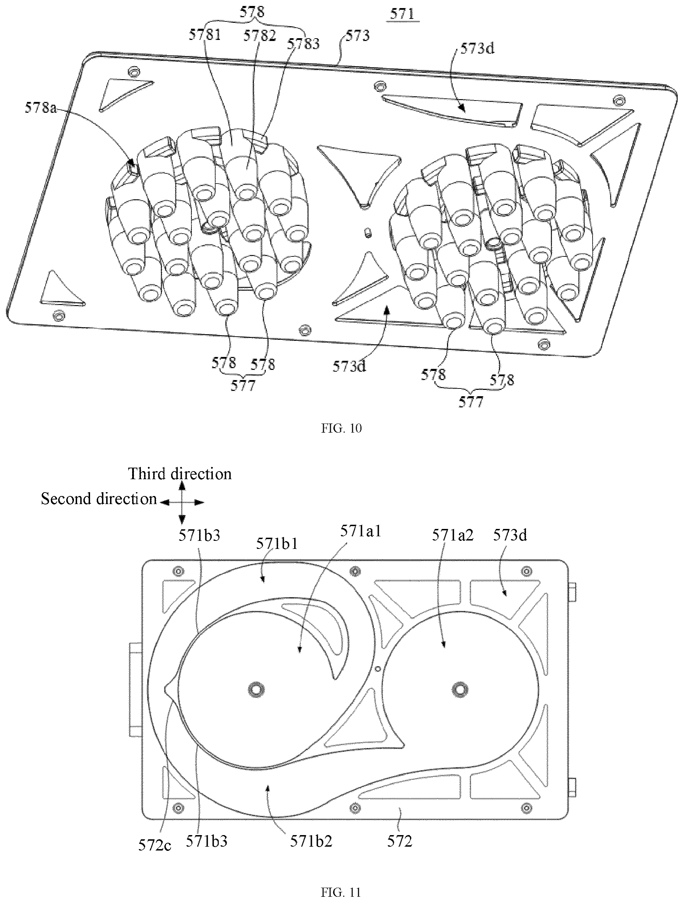

With reference to FIG. 8 and FIG. 11, in an embodiment of the present invention, the base 572 is provided with an airflow guide portion 572c in an area corresponding to the cyclone inlet 57e, and in a direction that the cyclone inlet 57e towards the airflow guide portion 572c, a cross-sectional dimension of the airflow guide portion 572c gradually increases and the airflow guide portion 572c extends towards two adjacent air inlet passages 571b to guide an airflow to divert into the adjacent two air inlet passages 571b.

The airflow guide portion 572c serves to separate and guide a contacted airflow, so as to divert it into the two air inlet passages 571b. In some embodiments, the cyclone inlet 57e has a relatively long length in its air flow direction, and the airflow guide portion 572c is disposed in the cyclone inlet 57e and is located at an end of the cyclone inlet 57e close to the air inlet passage 571b. In some examples, the airflow guide portion 572c is provided at a joint of the two air inlet passages 571b. In some examples, the airflow guide portion 572c is a protruding structure or includes two plate structures arranged at an angle. In some examples, opposite sides of the airflow guide portion 572c are designed as inclined surfaces or curved surfaces, ensuring that the opposite sides are in a gradually expanding configuration along a direction away from the cyclone inlet 57e to guide the airflow.

In the present embodiment, the airflow is guided and diverted by the airflow guide portion 572c to enter the air inlet passage 571b more smoothly, so that the airflow is maintained a high velocity, which is beneficial for improving a subsequent separation effect on particulate matter. In other embodiments, the air inlet groove 572a is disposed on the bracket 573, and the airflow guide portion 572c is disposed on the bracket 573.

With reference to FIG. 11, in an embodiment of the present invention, two adjacent air inlet passages 571b respectively include adjacent passage walls 571b3 close to each other, the two adjacent passage walls 571b3 are connected to each other at an end thereof close to the cyclone inlet 57e, and are arranged at intervals relative to the cyclone inlet 57e; and the airflow guide portion 572c is protrudingly disposed at a joint of the two adjacent passage walls 571b3. In an embodiment of the present invention, the airflow guide portion 572c may be conical, with a cone apex facing the cyclone inlet 57e. The airflow guide portion 572c and the two adjacent passage walls 571b3 are an integrated structure, or the airflow guide portion 572c is disposed between the cyclone inlet 57e and the two adjacent passage walls 571b3.

In the present embodiment, ends of the two air inlet passages 571b close to the cyclone inlet 57e communicate with each other, so that a sufficient space is provided to dispose the airflow guide portion 572c. At the same time, it makes the arrangement of the cyclone inlet 57e and the air inlet passage 571b be simpler, thereby be convenient for manufacturing the cyclone separator 57. In some embodiments, the base 572 is provided with the air inlet groove 572a as described above, and the adjacent passage walls 571b3 are groove walls of adjacent two air inlet grooves 572a close to each other.

With reference to FIG. 8, FIG. 11, and FIG. 12, in an embodiment of the present invention, the axis of the cyclone cylinder 578 is parallel to a first direction, and the at least two separation chambers 571a are sequentially arranged in a second direction intersecting with the first direction.

When the cyclone separator 57 is in the normal operation state, the first direction is the vertical direction as described above, and the second direction is a horizontal direction.

In the present embodiment, the separation chambers 571a are arranged along the horizontal direction, so that the at least two air inlet passages 571b are located at a same height, which simplifies a shape of the air inlet passage 571b on a basis that air enters each separation chamber 571a tangentially, thereby being convenient for manufacturing the cyclone separator 57.

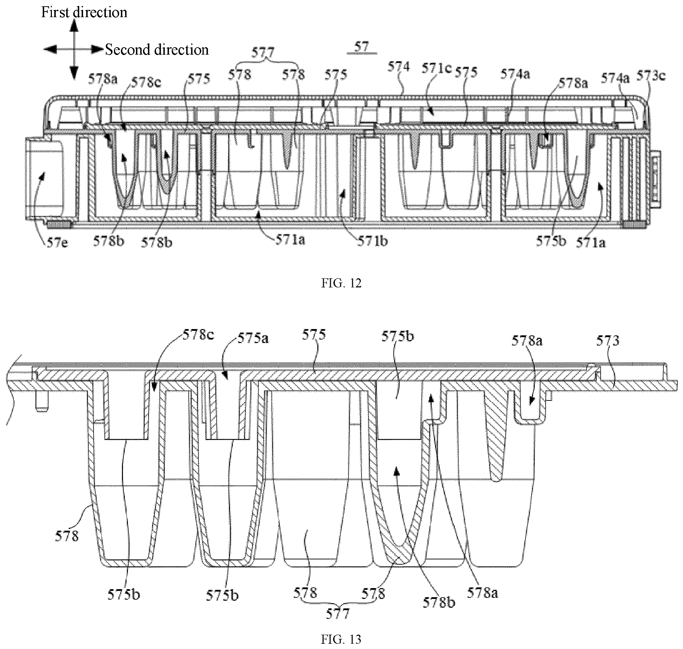

With reference to FIG. 12, in an embodiment of the present invention, the cyclone inlet 57e is located on a side of the at least two separation chambers 571a in the second direction, the at least two air inlet passages 571b are located on two opposite sides of the separation chamber 571a in a third direction, respectively, and the third direction intersects with the first direction and the second direction.

In some embodiments, the first direction corresponds to the vertical direction, the second direction corresponds to the horizontal direction, and the third direction corresponds to a front-rear direction.

In the present embodiment, the cyclone inlet 57e is disposed on a left wall or a right wall of the base 572, and the two air inlet passages 571b are arranged on two sides in the front and rear direction, so that a space of the base 572 in the horizontal direction is better utilized by the air inlet passage 571b, thereby a size of the base 572 in the front-rear direction does not need to be set too large, and thus an overall volume of the cyclone separator 57 is reduced. It should be noted that, the present invention is not limited to this. In other embodiments, the cyclone inlet 57e is disposed on a front wall or a rear wall of the base 572, and is located between the two separation chambers 571a.

With reference to FIG. 11, in an embodiment of the present invention, the at least two separation chambers 571a include a first separation chamber 571a1 and a second separation chamber 571a2, and the first separation chamber 571a1 is closer to the cyclone inlet 57e than the second separation chamber 571a2. The at least two air inlet passages 571b include a first air inlet passage 571b1 and a second air inlet passage 571b2. The first air inlet passage 571b1 communicates with a side of the first separation chamber 571a1 close to the second separation chamber 571a2, and the second air inlet passage 571b2 communicates with a side of the second separation chamber 571a2 close to the first separation chamber 571a1.

In some embodiments, the cyclone inlet 57e is disposed on a left side wall of the base 572, the first separation chamber 571a1 is located on a left side of the cyclone inlet 57e, and the second separator is located on a right side of the cyclone inlet 57e.

In the present embodiment, the first air inlet passage 571b1 communicates with a right side of the first separation chamber 571a1, and the second air inlet passage 571b2 communicates with a left side of the second separation chamber 571a2, so that airflow paths of the first air inlet passage 571b1 and the second air inlet passage 571b2 are equivalent, thereby uniformity of the airflow entering the first separation chamber 571a1 and the second separation chamber 571a2 is improved. In some implementations, to improve distribution compactness of the air inlet passage 571b and the separation chamber 571a, and to facilitate air to tangentially enter the separation chamber 571a to enhance a rotational effect and a flow rate of the airflow, the first air inlet passage 571b1 surrounds a portion of the first separation chamber 571a1, and the second air inlet passage 571b2 surrounds a portion of the first separation chamber 571a1.

With reference to FIG. 9, FIG. 12 and 13, in an embodiment of the present invention, the cyclone separator 57 also includes a top cover 574. The top cover 574 is disposed on the bracket 573, and is located outside the separation chamber 571a. The top cover 574 encloses with the bracket 573 to form an air outlet chamber 571c, and the airflow outlet 578c communicates with the air outlet chamber 571c. The base 572 is provided with the cyclone outlet 57c, and the bracket 573 is provided with an air passage hole 573d communicating with the cyclone outlet 57c and the air outlet chamber 571c.

In the present embodiment, the air outlet chamber 571c facilitates to communicate with a plurality of the cyclone cylinders 578, then the required number of the cyclone outlets 57c is reduced, thereby being further convenient for manufacturing the cyclone separator 57. The air outlet chamber 571c also stabilizes the airflows from the plurality of cyclone cylinders 578, allowing the airflows to flow out orderly along the cyclone outlet 57c, thereby the possibility of turbulence among the airflows from the plurality of cyclone cylinders 578 is reduced. It should also be noted that, in other embodiments, the top cover 574 is provided with the cyclone outlet 57c communicating with the air outlet chamber 571c, or the bracket 573 is provided with the cyclone outlet 57c communicating with the air outlet chamber 571c.

With reference to FIG. 3, FIG. 4, FIG. 6, and FIG. 7, in an embodiment of the present invention, the axis of the cyclone cylinder 578 is parallel to a first direction, and the top cover 574 and the base 572 are disposed on two opposite sides of the bracket 573 in the first direction, respectively. The base 572 is provided with the cyclone outlet 57c, and the cyclone outlet 57c penetrates through the base 572 in the first direction.

The first direction is the vertical direction as described above, the top cover 574 is disposed above the bracket 573, and the base 572 is disposed below the bracket 573, thereby the arrangement of the air outlet chamber 571c and the separation chamber 571a in the vertical direction is achieved.

In the present embodiment, the air outlet chambers 571c are disposed above each separation chamber 571a, thereby improving stacking compactness to further reduce the overall volume of the cyclone separator 57. The cyclone outlet 57c penetrates through a lower surface of the base 572, enabling the cyclone separator 57 to discharge exhaust from the bottom, thereby facilitating the upstream and downstream airflow passages of the cyclone separator 57 to be arranged at an angle, and thus further improving the distribution compactness of the structure. The cyclone separator 57 is applied in the purifier 50, and the cyclone separator 57 is disposed upstream of at least one of the filter elements 534, thereby allowing the pre-installed cyclone separator 57 to perform preliminary separation of the particulate matter entrained in the airflow, therefore a filtering burden on downstream of the cyclone separator 57 is reduced, and thus a replacement frequency of the filter element 534 is reduced.

With reference to FIG. 6, FIG. 7, FIG. 12, and FIG.13, in an embodiment of the present invention, the airflow inlet 578a of the cyclone cylinder 578 penetrates through and is exposed on a side of the bracket 573 away from the base 572. In an example, the base 572 also includes at least two upper covers 575, the at least two upper covers 575 are disposed in the air outlet chamber 571c, and each upper cover 575 is disposed corresponding to one of the cyclone structures 577 and covers the airflow outlet 578c. The upper cover 575 is provided with at least two openings 575a and at least two protruding rings 575b, each opening 575a is disposed corresponding to one of the airflow outlets 578c, an end of each protruding ring 575b surrounds one of the openings 575a, and the other end of each protruding ring passes through the corresponding through-hole 571d and is inserted into the corresponding cyclone chamber 578b. In a direction perpendicular to the first direction, a cross-sectional area of the protruding ring 575b is less than a cross-sectional area of the cyclone cylinder 578. After the airflow enters the cyclone cylinder 578 from the airflow inlet 578a, the airflow rotates downward along a gap between an inner side of the cyclone cylinder 578 and the protruding ring 575b for separation, then flows out through the protruding ring 575b, thereby allowing the protruding ring 575b to effectively isolate the rotational separation and outflow processes of the airflow in the cyclone cylinder 578, and thus a separation effect of the particulate matter entrained in the airflow is improved.

In an embodiment of the present invention, to simplify disassembly and assembly of the cyclone separator 57 to be convenient for cleaning the cyclone separator 57, the top cover 574 is detachably connected to the base 572 by means of screw connection, magnetic connection, or snap-fit connection or the like, and the upper cover 575 and the bracket 573 are clamped between the top cover 574 and the base 572. To facilitate positioning and installation of the base 572., with reference to FIG. 6 and FIG. 9, in some examples, the bracket 573 is provided with a first annular rib 573a, and the upper cover 575 is installed and limited in the first annular rib 573a. In some examples, the bracket 573 is provided with a positioning rib 573b, the upper cover 575 is provided with a positioning hole body 575c, and the positioning rib 573b is inserted into the positioning hole body 575c. Similarly, with reference to FIG. 5, FIG. 9, and FIG. 12, in some examples, the bracket 573 is provided with a second annular rib 573c along its circumferential direction, and the second annular rib 573c abuts against an inner side of the top cover 574. In some examples, to facilitate clamping of the upper cover 575 and the bracket 573 by the top cover 574, the top cover 574 is provided with an abutting rib 574a, so that the top cover 574 abuts against the upper cover 575 through a portion of the abutting ribs 574a, and the top cover 574 abuts against the bracket 573 through a portion of the abutting ribs 574a.

In view of the above issues in the related art, a structure of the purifier 50 in some other embodiments will be explained and described below with reference to the drawings. In these other embodiments, the structures and contents that are same as those in the aforementioned embodiments will not be repeated herein.

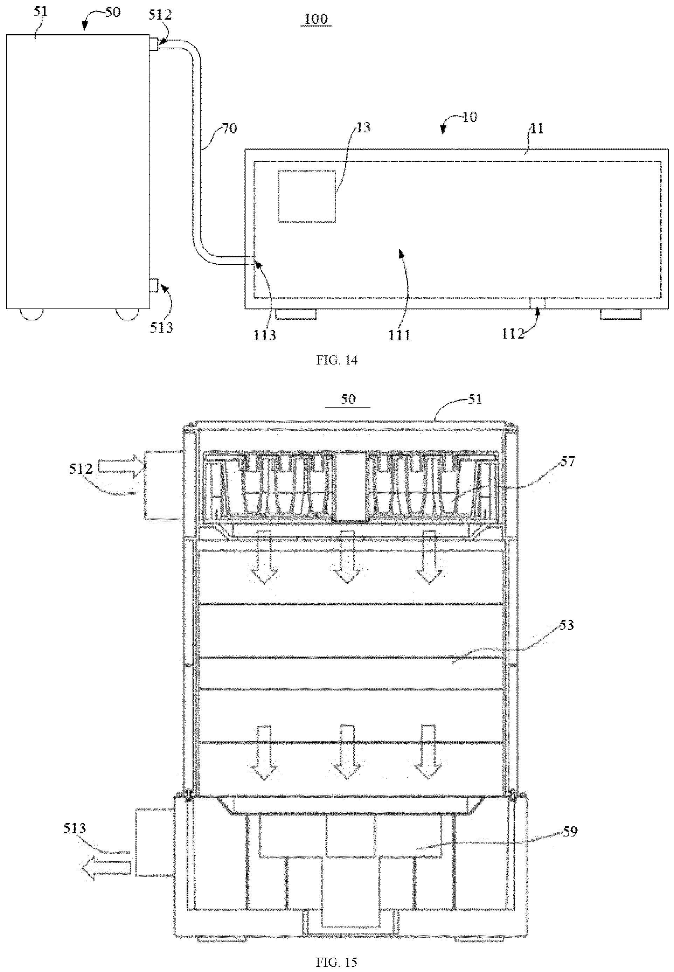

With reference to FIG. 15 to FIG. 17, in an embodiment of the present invention, the purifier 50 includes a filter element assembly 53. The filter element assembly 53 is disposed in the air duct 511, and is located between the air inlet 512 and the air outlet 513. The filter element assembly 53 includes at least one filter element 534, and the cyclone separator 57 is at least located upstream of one of the at least one filter element 534.

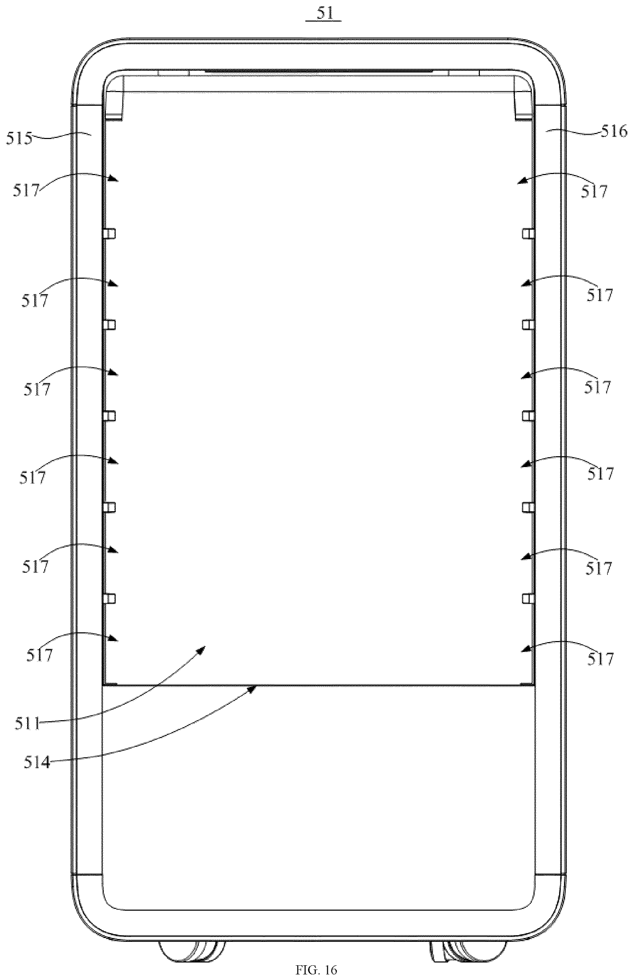

With reference to FIG. 15 and FIG. 16, in an embodiment of the present invention, the air duct 511 is disposed to extend in the vertical direction, the air inlet 512 is disposed at an upper end of the casing 51, and the air outlet 513 is disposed at a lower end of the casing 51.

In the present embodiment, the casing 51 is disposed to extend in the vertical direction correspondingly, which improves utilization of a space in the vertical direction, thereby an occupied space of the purifier 50 is reduced. In some implementations, the air inlet 512 and the air outlet 513 are disposed at the upper end and the lower end of the casing 51, respectively, so that an air flow direction from top to bottom is achieved, that is, the airflow flows from top to bottom, thereby the particulate matter to be filtered in the airflow does not need to overcome gravity, and thus the airflows ability to carry the particulate matter is enhanced.

With reference to FIG. 15 to FIG. 17, in an embodiment of the present invention, the cyclone separator 57 includes a first surface 57a and a second surface 57b arranged opposite to each other in an air flow direction of the air duct 511 (as shown by an arrow in FIG. 15), and the cyclone separator 57 also includes a cyclone side wall 57d connecting the first surface 57a and the second surface 57b. The cyclone side wall 57d is provided with the cyclone inlet 57e, and the second surface 57b is provided with the cyclone outlet 57c.

The air flow direction of the air duct 511 is from top to bottom as described above, the first surface 57a of the cyclone separator 57 is an upper surface of the cyclone separator 57, the second surface 57b is a lower surface of the cyclone separator 57, and the cyclone side wall 57d is a side surface of the cyclone separator 57.

In the present embodiment, the cyclone inlet 57e is disposed on the cyclone side wall 57d, which facilitates the airflow to enter the cyclone separator 57 tangentially along a circumferential direction, thereby better guiding the airflow to rotate in the cyclone separator 57 and increases the flow velocity, and thus a separation effect of the cyclone separator 57 on the particulate matter entrained in the airflow is improved. With the cyclone outlet 57c disposed on the second surface 57b, the connecting pipe 70 and the casing 51 are arranged at an angle as described above, which is beneficial to improve arrangement compactness of the connecting pipe 70 and the casing 51, and facilitates the air duct 511 to be disposed to extend in the vertical direction as described above. It should be noted that, the present invention is not limited to this, in other embodiments, the cyclone outlet 57c is disposed on the first surface 57a, and the air flow direction of the air duct 511 is from bottom to top. Alternatively, the cyclone outlet 57c is disposed on the cyclone side wall 57d, and the air duct 511 is disposed to extend in the horizontal direction.

With reference to FIG. 15 to FIG. 17, in an embodiment of the present invention, the purifier 50 also includes a fan 59, and the fan 59 in the purifier 50 is defined as a second fan 59. The second fan 59 is disposed in the air duct 511, and is located downstream of the filter element assembly 53 and the cyclone separator 57. The second fan 59 includes a first wall surface 591 and a fan side wall 593, the first wall surface 591 and the second surface 57b are arranged opposite to each other, and the second fan side wall 593 is connected to the first wall surface 591. The first wall surface 591 is provided with a fan inlet 591a, and the fan side wall 593 is provided with a fan outlet 593a.

The air flow direction of the air duct 511 is from top to bottom as described above, and the second fan 59 is located at the lowermost end relative to the filter element assembly 53 and the cyclone separator 57. The first wall surface 591 of the second fan 59 is an upper surface of the second fan 59, and the fan side wall 593 is a side surface of the second fan 59.

In the present embodiment, the second fan 59 is provided to enhance a driving force on the airflow, thereby improving a driving effect on the airflow. The second fan 59 is disposed downstream of the filter element assembly 53 and the cyclone separator 57, so that the airflow is purified by the front-end cyclone separator 57 and the filter element assembly 53 before passing through the second fan 59. In this way, the airflow enters the second fan 59 is relatively pure, so that the particulate matter or moisture entrained in the airflow is prevented from entering the second fan 59, thereby a service life of the second fan 59 is prolonged. In some embodiments, the fan inlet 591a is disposed on the first wall 591, which generally opposites to the cyclone outlet 57c of the cyclone separator 57, thereby facilitating regular extension of the air duct 511 in the vertical direction, and thus being convenience for manufacturing. It also facilitates regular and compact arrangement of the filter element assembly 53, the cyclone separator 57 and the second fan 59 in air duct 511 in the vertical direction, thereby being convenient for arranging and reducing the overall volume of the purifier 50. The fan outlet 593a is disposed on the side wall 593, so that a lower surface of the second fan 59 and the casing 51 do not need for an additional air flow space, thereby arrangement compactness between the second fan 59 and the casing 51 is improved. At the same time, the ground is prevented from obstructing discharging of the airflow, so that it facilitates a gas to be discharged from a side of the purifier 50.

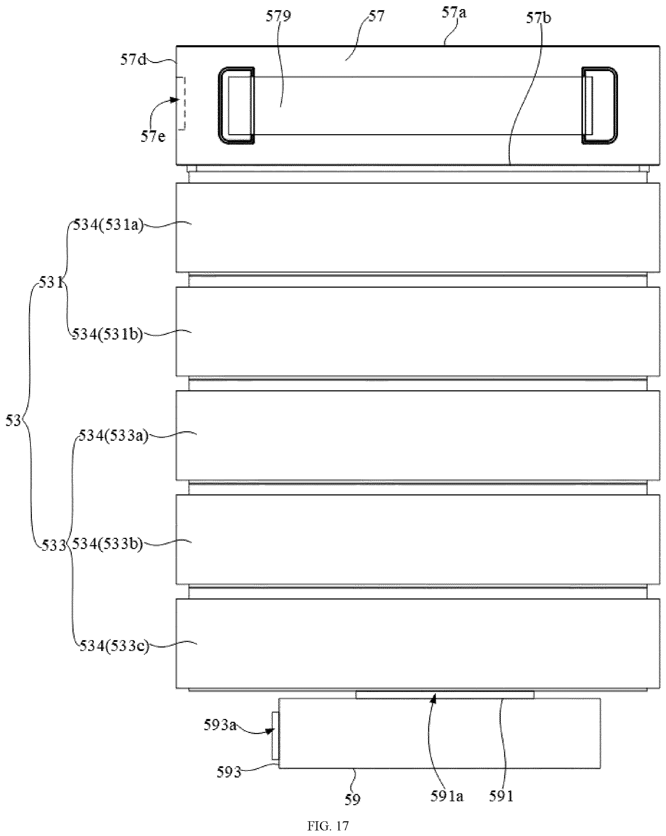

With reference to FIG. 15 and FIG. 17, in an embodiment of the present invention, the air inlet 512 and the air outlet 513 are located on a same side of the casing 51, the cyclone inlet 57e is disposed corresponding to the air inlet 512, and the fan outlet 593a is disposed corresponding to the air outlet 513.

The air flow direction of the air duct 511 is from top to bottom as described above, and the air inlet 512 and the air outlet 513 are located on a left side or a right side of the casing 51. The cyclone inlet 57e communicates with the air inlet 512 directly, or communicates with the air inlet 512 through a portion of the air duct 511, or communicates with the air inlet 512 via an air guide tube. Similarly, the fan outlet 593a communicates with the air outlet 513 directly, or communicates with the air outlet 513 through a portion of the air duct 511, or communicates with the air outlet 513 via an air guide tube.

In the present embodiment, the air inlet 512 and the air outlet 513 are disposed on the same side of the casing 51, allowing both an air inlet side and an air outlet side of the purifier 50 to face toward the main body 110 of the laser processing device 10, so that a space between the purifier 50 and the main body 110 is better utilize, thereby preventing discharged gas of the purifier 50 from affecting surrounding objects or a person.

With reference to FIG. 16, in an embodiment of the present invention, the casing 51 is also provided with an installation port 514 communicating with the air duct 511, and the installation port 514 is configured to allow the filter element assembly 53 and the cyclone separator 57 to pass through to be detachably installed in the air duct 511.

In some examples, the air inlet 512 and the air outlet 513 are located on the left side or the right side of the casing 51 as described above. The installation port 514 is located on a front side of the casing 51, and is disposed along an extension direction of the air duct 511 (that is, the vertical direction).

In some embodiments, to facilitate to hold, assembly and disassembly the cyclone separator 57, a handle 579 is provided on a side of the cyclone separator 57 close to the installation port 514. Similarly, to facilitate to hold, assembly and disassembly the filter element 534, a handle 579 is provided on a side of the filter element 534 close to the installation port 514. It should also be noted that, in other embodiments, the cyclone separator 57 and the filter element 534 are detachably connected to the casing 51 by means of snap-fit connection, or magnetic connection or the like.

The extension direction of the air duct 511 of the casing 51, the overall arrangement direction and an installation method of the filter element assembly 53 and the cyclone separator 57 are described above. Detailed structures of the filter element assembly 53 and the cyclone separator 57 in the casing 51 will be explained and described below.

With reference to FIG. 15 and FIG. 17, in an embodiment of the present invention, the filter element assembly 53 includes a front filter element component 531 and a rear filter element component 533 sequentially arranged along the air flow direction of the air duct 511, the front filter element component 531 and the rear filter element component 533 include at least one filter element 534 separately, and a filter hole of the filter element 534 in the front filter element component 531 is greater than a filter hole of the filter element 534 in the rear filter element component 533. The front filter element component 531 is a filter element 534 relatively closer to the air inlet 512, and the rear filter element component 533 is a filter element 534 relatively closer to the air outlet 513.

In the present embodiment, at least two filter elements 534 form the front filter element component 531 and the rear filter element component 533, and the filter hole of the front filter element component 531 is greater than the filter hole of the rear filter element component 533. When a processing exhaust gas enters the air duct 511 from the air inlet 512 of the casing 51, it first passes through the front filter element component 531 with relatively larger filter holes to filter larger particulate matter, and then passes through the rear filter element component 533 with relatively smaller filter holes to filter smaller particulate matter, harmful gases, or odors, thereby achieving proper and effective filtration on various components to be filtrated in the processing exhaust gas by the purifier 50, and thus a filtration efficiency of the purifier 50 is improved. Through a graded filtration including a preliminary filtration and a secondary filtration, the rear filter element component 533 is less likely to come into contact with relatively large particulate matter, thereby a possibility of clogging in the filter element 534 is reduced, and thus a service life of the filter element 534 is further prolonged. Since the front filter element component 531 has relatively large filter holes, the cyclone separator 57 is located upstream of the front filter element component 531 or between the front filter element component 531 and the rear filter element component 533.

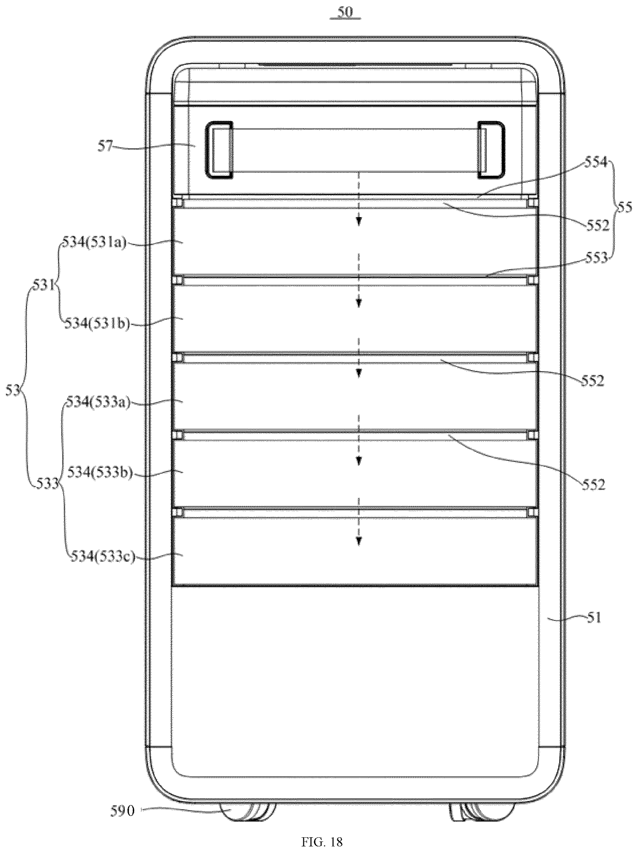

With reference to FIG. 17 and FIG. 18, in an embodiment of the present invention, the filter element 534 in the front filter element component 531 is at least one of a primary filter element 531a and a medium efficiency filter element 531b. That is, the front filter element component 531 includes only the primary filter element 531a or includes only the medium efficiency filter element 531b, or includes both the primary filter element 531a and the medium efficiency filter element 531b. The number of the primary filter elements 531a is one, two, or more. Similarly, the number of the medium efficiency filter elements 531b is one, two, or more.

In the present embodiment, the primary filter element 531a effectively filters the larger particulate matter (for example, dust, pollen, or hair), and the medium efficiency filter element 531b effectively filters the relatively smaller particulate matter (for example, dust, smoke), thereby effective preliminary interception and filtration of the particulate matter are achieved.

With reference to FIG. 17 and FIG. 18, in an embodiment of the present invention, the filter element 534 in the rear filter element component 533 is at least one of an activated carbon filter element 533a, a carbon-sandwiched cloth filter element 533b, and a high efficiency filter element 533c. In some examples, the rear filter element component 533 includes only the activated carbon filter element 533a, and in some examples, the rear filter element component 533 includes only the carbon-sandwiched cloth filter element 533b, or includes only the high efficiency filter element 533c. In some examples, the rear filter element component 533 includes any two of the activated carbon filter element 533a, the carbon-sandwiched cloth filter element 533b, and the high efficiency filter element 533c. Alternatively, the rear filter element component 533 includes the activated carbon filter element 533a, the carbon-sandwiched cloth filter element 533b and the high efficiency filter element 533c. The number of the activated carbon filter elements 533a is one, two, or more. Similarly, the number of the carbon-sandwiched cloth filter elements 533b is one, two, or more, and the number of the high efficiency filter elements 533c is one, two, or more.

In the present embodiment, the activated carbon filter element 533a effectively filters harmful gases (for example, formaldehyde, benzene and sulfur dioxide), odors, and volatile organic compounds (for example, volatile compounds in paints and cleaning agents). The carbon-sandwiched cloth filter element 533b filters harmful gases, odors, and particulate matter. The high efficiency filter element 533c effectively filters ultrafine particulate matter, allergens, bacteria, viruses, tiny smoke particles, and odors. Therefore, effective secondary interception and filtration of the particulate matter and/or effective secondary filtration of gases, odors, and volatile organic compounds is achieved.

In an embodiment of the present invention, to achieve zoned and effective filtration of particulate matter, gases, odors, and volatile organic compounds, with reference to FIG. 17 and FIG. 18, the front filter element component 531 includes at least two filter elements 534, specifically the primary filter element 531a and the medium efficiency filter element 531b, and the rear filter element component 533 includes at least three filter elements 534, specifically the activated carbon filter element 533a, the carbon-sandwiched cloth filter element 533b and the high efficiency filter element 533c. The primary filter element 531a, the medium efficiency filter element 531b, the activated carbon filter element 533a, the carbon-sandwiched cloth filter element 533b and the high efficiency filter element 533c are sequentially arranged along the air flow direction. Alternatively, the primary filter element 531a, the medium efficiency filter element 531b, the carbon-sandwiched cloth filter element 533b, the activated carbon filter element 533a, and the high efficiency filter element 533c are sequentially arranged along the air flow direction, or the primary filter element 531a, the medium efficiency filter element 531b, the carbon-sandwiched cloth filter element 533b, the high efficiency filter element 533c and the activated carbon filter element 533a are sequentially arranged along the air flow direction. Since the above arrangement effectively filters all components to be filtered in the processing exhaust gas, the number of the primary filter elements 531a, the medium efficiency filter elements 531b, the activated carbon filter elements 533a, the carbon-sandwiched cloth filter elements 533b and the high efficiency filter elements 533c is set to be one to reduce an overall number of the filter elements 534. Materials of the primary filter element 531a, the medium efficiency filter element 531b, and the high efficiency filter element 533c are glass fiber, HEPA (high efficiency particulate Air) media, or steel wire, the material of the primary filter element 531a, the medium efficiency filter element 531b, and the high efficiency filter element 533c are not limited by the present invention.

With reference to FIG. 3 to FIG. 12, in an embodiment of the present invention, the cyclone separator 57 includes the base 572 and the cyclone module 571. The cyclone module 571 includes the bracket 573 and at least two cyclone structures 577 connected to the bracket 573, the bracket 573 encloses with the base 572 to form at least two isolated separation chambers 571a and at least two air inlet passages 571b, the base 572 and/or the bracket 573 are provided with the cyclone inlet 57e, an end of each air inlet passage 571b communicates with the cyclone inlet 57e, and the other end of each air inlet passage 571b communicates with at least one separation chambers 571a. Each cyclone structure 577 is located in one of the separation chambers 571a.

In the present embodiment, when an airflow enters the cyclone separator 57 through the cyclone inlet 57e, the airflow passes through the two air inlet passages 571b and enters the two separation chambers 571a separately, and after the particulate matter entrained in the airflow are separated by the cyclone structure 577 in the separation chamber 571a, the airflow then enters the air outlet chamber 571c and flows out through the airflow outlet 578c. By providing the at least two cyclone structures 577, a contact area with the airflow is increased, and a larger space for accommodating the particulate matter is provided, which prevents rapid and excessive accumulation of the particulate matter, thereby a separation effect of the cyclone separator 57 on the particulate matter entrained in the airflow is improved. In this case, both upstream and downstream sections of the at least two cyclone structures 577 share a single set of airflow passages for the airflow to pass through, thereby the structure is simplified. The base 572 encloses with the bracket 573 of the cyclone separator 57 to form the separation chamber 571a and the air inlet passage 571b, allowing the base 572 and the bracket 573 to be manufactured independently and conveniently, and then be assembled to form the separation chamber 571a and the air inlet passage 571b, thereby being convenient for processing and forming the separation chamber 571a and the air inlet passage 571b. In some examples, the second surface 57b and the cyclone sidewall 57d described above are formed on the base 572, and the handle 579 is disposed on the base 572.

In view of the above issues in the related art, a structure of the purifier 50 in some other embodiments will be explained and described below with reference to the drawings. In this other embodiment, the same structures and contents that are same those in the above embodiment please refer to the above description, and will not be repeated herein.

With reference to FIG. 18 to FIG. 20, in an embodiment of the present invention, the purifier 50 includes a sealing structure 55. The filter hole of the filter element 534 in the front filter element component 531 is greater than the filter hole of the filter element 534 in the rear filter element component 533. The sealing structure 55 is at least located between every two adjacent filter elements 534, and is configured in an annular shape to enclose and form the first passage 551 communicating with the two adjacent filter elements 534.

In some implementations, the air inlet 512 is disposed on an upper surface of the casing 51, or is disposed on a side surface of the casing 51. Similarly, the air outlet 513 is disposed on a lower surface of the casing 51, or is disposed on the side surface of the casing 51. In some examples, the air outlet 513 is disposed on the lower surface of the casing 51, and the bottom of the casing 51 is provided with a support column or a support structure such as a movable wheel 590 described below, so that a gap is formed between the casing 51 and the ground to facilitate the airflow to flow out from the air outlet 513. In some examples, the air outlet 513 is disposed on the side surface of the casing 51, and the air outlet 513 and the air inlet 512 are located on a same side surface of the casing 51 or different side surfaces of the casing 51.

It should also be noted that, in other embodiments, the air duct 511 and the casing 51 are disposed to extend along the horizontal direction or other directions.

In some embodiments, the sealing structure 55 is disposed between two adjacent filter elements 534. In some embodiments, the sealing structure 55 is disposed between the filter element 534 and the casing 51. In some examples, the filter element 534 includes a filtering portion at an inner side and an installation frame surrounding the filtering portion. The sealing structure 55 is disposed between two installation frames of adjacent filter elements 534, or in some implementations, the sealing structure 55 is disposed between the installation frame of the filter element 534 and the casing 51, and the first passage 551 formed by the enclosure of the sealing structure 55 is disposed corresponding to the filtering portion. In this way, the arrangement of the sealing structure 55 will not block a filtering portion of the filter element 534, thereby an effective filtering area of the filter element 534 is improved. A material of the sealing structure 55 is foam, so that the sealing structure 55 has good elasticity and will undergo elastic deformation when being clamped, thereby generating a deformation elastic force, which in turn drives the sealing structure 55 to tightly adhere to two objects that need to be sealed, and thus a sealing effect of the sealing structure 55 is improved.

In some implementations, the sealing structure 55 is at least located between every two adjacent filter elements 534, and is configured in an annular shape to enclose and form the first passage 551 communicating with the two adjacent filter elements 534, so that each filter element 534 is relatively sealed, ensuring that the airflow can only pass through the first passage 551 to enter a subsequent filter element 534 after flowing out of a previous filter element 534, thereby a possibility of the airflow leakage between adjacent filter elements 534 is reduced, and a reliability of the purifier 50 is improved. At the same time, the adjacent filter elements 534 are arranged at intervals to improve smoothness of the airflow, thereby facilitating more sufficient contact between the airflow and each filter element 534, thereby a filtration efficiency on the purifier 50 is enhanced.

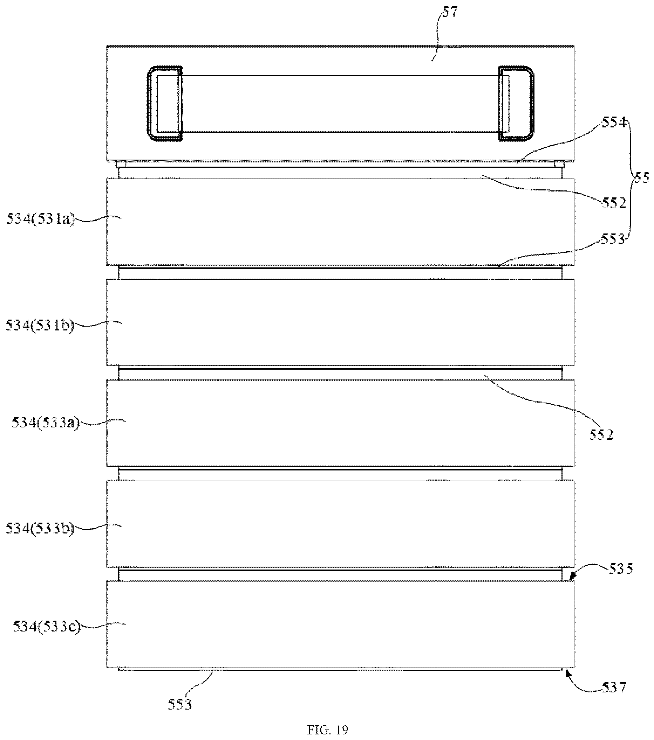

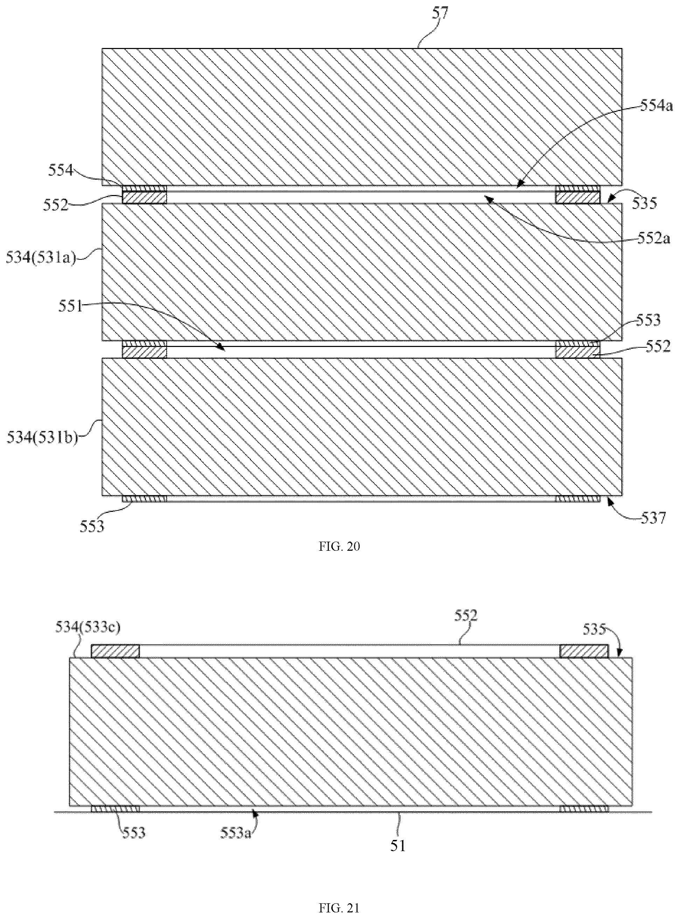

With reference to FIG. 19 and FIG. 20, in an embodiment of the present invention, the filter element 534 has an air inlet side 535 and an air outlet side 537 that are set opposite to each other, and the sealing structure 55 includes a first sealing member 552 and a second sealing member 553. The first sealing member 552 is in an annular shape and is disposed on the air inlet side 535, and the second sealing member 553 is in an annular shape and is disposed on the air outlet side 537. The second sealing member 553 and the first sealing member 552 located at the two adjacent filter elements 534 abut against each other and cooperatively enclose to form the first passage 551.

The air inlet side 535 is a side of the filter element 534 where the airflow enters. The air outlet side 537 is a side of the filter element 534 where the airflow flows out. For example, the air flow direction of the air duct 511 is from top to bottom as described above. The air inlet side 535 is an upper side of the filter element 534, and the air outlet side 537 is a lower side of the filter element 534.

In the present embodiment, the sealing structure 55 is configured to include the first sealing member 552 and the second sealing member 553 which are disposed on the air inlet side 535 and the air outlet side 537 of the filter element 534, respectively, allowing the sealing structure 55 to be installed in a single operation when the filter element 534 is installed in the air duct 511, thereby an assembly efficiency of the purifier 50 is improved. The present invention is not limited to this. In other embodiments, the sealing structure 55 includes a plurality of independent sealing rings, each sealing ring is disposed between two adjacent filter elements 534 to enclose to form the first passage 551.

With reference to FIG. 19 and FIG. 20, in an embodiment of the present invention, in the air flow direction of the air duct 511, a thickness of the first sealing member 552 differs from a thickness of the second sealing member 553.

In the present embodiment, the thickness of the first sealing member 552 and the thickness of the second sealing member 553 are set to be different, for example, the thickness of the first sealing member 552 located on the air inlet side 535 (or the upper side) of the filter element 534 is set to be greater than the thickness of the second sealing member 553 located on the air outlet side 537 (or the lower side) of the filter element 534, so that the air inlet side 535 and the air outlet side 537 the filter element 534 are distinguished based on the thicknesses of the first sealing member 552 and the second sealing member 553 during installation, thereby preventing incorrect orientation of the filter element 534. In some embodiments, the thickness of the first sealing member 552 located on the air inlet side 535 of the filter element 534 is set to be less than the thickness of the second sealing member 553 located on the air outlet side 537 of the filter element 534. In other embodiments, the thicknesses of the first sealing member 552 and the second sealing member 553 are set to be the same.

In an embodiment of the present invention, the first sealing member 552 is bonded to the air inlet side 535, so that the connection between the first sealing member 552 and the filter element 534 is relatively simple. Meanwhile, a larger contact area is provided, thereby stability and sealing performance of the connection are improved. Similarly, the second sealing member 553 is bonded to the air outlet side 537.

In an embodiment of the present invention, the first sealing member 552 is an annular integrated structure to achieve quick one-time installation on the filter element 534. In other embodiments, the first sealing member 552 is a multi-segment split structure which encloses to form an annular shape. For example, the first sealing member 552 includes four segments, and each segment is disposed on a portion of the circumference of the filter element 534 raw material of the first sealing member 552 is modularly divided into relatively small segments with smaller volumes to increase the number of divisions that is made on the same raw material, thereby a utilization rate of the raw material is improved. Similarly, the second sealing member 553 is also an annular integrated structure or a multi-segment split structure which encloses to form an annular shape.

With reference to FIG. 18, FIG. 19, and FIG. 20, in an embodiment of the present invention, to improve the sealing performance between the cyclone separator 57 and the filter element 534, the sealing structure 55 is located between the cyclone separator 57 and the filter element 534. In some examples, the filter element 534 adjacent to the air inlet 512, that is, the air inlet side 535 of the primary filter element 531a as described above, is provided with the first sealing member 552, and the first sealing member 552 adjacent to the air inlet 512 abuts against the cyclone separator 57 to enclose to form a third passage 552a communicating with the cyclone separator 57 and the filter element 534.

In some implementations, to prevent the thickness of the first sealing member 552 adjacent to the air inlet 512 from being set too large, the sealing structure 55 also includes a third sealing member 554. The third sealing member 554 is in an annular shape, and is provided on a side of the cyclone separator 57 facing to the filter element 534. The third sealing member 554 abuts against the first sealing member 552 adjacent to the cyclone separator 57 to enclose to form a fourth passage 554a communicating with the cyclone separator 57 and the third passage 552a.

In an embodiment of the present invention, the third sealing member 554 is bonded to the cyclone separator 57, so that the connection between the third sealing member 554 and the cyclone separator 57 is relatively simple. Meanwhile, a large contact area is provided, thereby stability and sealing of the connection are improved.

In an embodiment of the present invention, the third sealing member 554 is an annular integrated structure to achieve quick one-time installation on the cyclone separator57. In other embodiments, the third sealing member 554 is a multi-segment split structure and encloses to form an annular shape. For example, the third sealing member 554 includes four segments, each segment is disposed on a side of the circumferential direction of the cyclone separator 57, so that a raw material of the third sealing member 554 is modularly divided into relatively small segments with smaller volumes to increase the number of divisions that is made on the same raw material, thereby a utilization rate of the raw material is improved.

It should be noted that, in other embodiments, the purifier 50 is not provided with the cyclone separator 57 described above, and the first sealing member 552 adjacent to the air inlet 512 abuts against the casing 51 to enclose to form a second passage communicating with the air inlet 512 and the filter element 534, so as to achieve the sealing between the filter element 534 adjacent to the air inlet 512 and the casing 51.

With reference to FIG. 18, FIG. 19, and FIG. 21, in an embodiment of the present invention, to improve the sealing performance between the filter element 534 adjacent to the air outlet 513( that is, the high efficiency filter element 533c described above) and the casing 51, the air outlet side 537 of the filter element 534 adjacent to the air outlet 513 is also provided with the second sealing member 553, and the second sealing member 553 adjacent to the air outlet 513 abuts against the casing 51 to enclose to form a fifth passage 553a communicating with the air outlet 513 and the filter element 534.

With reference to FIG. 16 and FIG. 18, in an embodiment of the present invention, the casing 51 is provided with at least two insertion slots 517, the at least two insertion slots 517 are arranged side by side in the air flow direction of the air duct 511 and are located in the air duct 511, a portion of each filter element 534 is inserted into the corresponding insertion slot 517.

The casing 51 includes a first side wall 515 and a second side wall 516 opposite to each other in the horizontal direction, and only the first side wall 515 or the second side wall 516 is provided with the at least two insertion slots 517, each insertion slot 517 is disposed to extend along the front-rear direction, and at least two insertion slots 517 are arranged side by side in the vertical direction. In some embodiments, the first side wall 515 and the second side wall 516 are simultaneously provided with at least two insertion slots 517, and the insertion slots 517 on the second side wall 516 and the insertion slots 517 on the first side wall 515 are arranged in a one-to-one correspondence manner, so as to limit and support two opposite sides of the filter element 534. In some embodiments, the insertion slot 517 is formed by recessing inner surfaces of the first side wall 515 and the second side wall 516. Alternatively, in some embodiments, protruding plates are provided on the inner surfaces of the first side wall 515 and the second side wall 516, and the insertion slot 517 is formed by enclosing two adjacent protruding plates with the first side wall 515 or the second side wall 516. It may be seen that, the present invention does not limit a structural type of the insertion slot 517. The insertion slot 517 extends to the installation port 514 in the front-rear direction, or does not extend to the installation port 514 but is arranged at intervals with the installation port 514, which just ensures that the filter element 534 is inserted into the corresponding insertion slot 517 when the filter element 534 is installed in the air duct 511 through the installation port 514.

In the present embodiment, by setting the insertion slot 517 on the casing 51, the filter element 534 is slidably inserted into the air duct 511 through the installation port 514simply, which is beneficial to improve the convenience of installing the filter element 534. At the same time, each filter element 534 is supported and limited through the insertion slot 517, which is beneficial to improve stability of the installation of each filter element 534 and avoid pressure damage. The filter element 534 and the casing 51 only have an abutting relationship, so that quick disassembly and assembly of the filter element 534 is achieved. In some implementations, the filter element 534 is limited and installed through the insertion slot 517, and is also detachably connected to the housing 51 via methods such as snap-fit or magnetic connection. In some embodiments, the purifier 50 is provided with the cyclone separator 57 as described above, and the insertion slot 517 is disposed at a position corresponding to the cyclone separator 57 for sliding insertion of the cyclone separator 57.

With reference to FIG. 1, in an embodiment of the present invention, the purifier 50 also includes a door body 58 which is connected to the casing 51, and the door body 58 is capable of opening and covering the installation port 514.

In the present embodiment, the door body 58 is used for isolating and protecting the filter element 534 and other components located in the air duct 511, and at the same time, aesthetic appearance of the purifier 50 is improved. A side of the door body 58 is pivotally connected to one of the first side wall 515 and the second side wall 516 of the casing 51, and the other end of the door body 58 is connected to the other one of the first side wall 515 and the second side wall 516 through a detachable connection method, such as snap-fit connection or magnetic connection, thereby the installation port 514 is opened and closed through the rotation of the door body 58. In some embodiments, the door body 58 is slidably connected to the casing 51, allowing the installation port 514 to be opened and closed by sliding the door body 58. Alternatively, at least two opposite sides of the door body 58 is detachably connected to the casing 51 via the snap connection or the magnetic connection.

With reference to FIG. 1 or FIG. 18, in an embodiment of the present invention, the purifier 50 also includes a movable wheel 590, and the movable wheel 590 is located on the casing 51. By setting the movable wheel 590 at the bottom of the casing 51, it is convenient for moving the purifier 50.

The embodiments described above are only some embodiments of the present invention, and are not intended to limit the protection scope of the present invention. Under an inventive concept of the present invention, any equivalent structural transformation made based on the content of the specification and drawings of the present invention, or direct/indirect application in other related technical fields, are all included within the protection scope of the present invention.

## Claims

1. A cyclone separator (57), comprising:
a base (572); and
a cyclone module (571), the cyclone module (571) comprising a bracket (573) and at least two cyclone structures (577) connected to the bracket (573), the bracket (573) and the base (572) being configured to enclose and form at least two isolated separation chambers (571a) and at least two air inlet passages (571b), the base (572) and/or the bracket (573) being provided with a cyclone inlet (57e), an end of each air inlet passage (571b) communicating with the cyclone inlet (57e), the other end of each air inlet passage (571b) communicating with at least one of the separation chambers (571a), and each cyclone structure (577) being located in one of the separation chambers (571a).

2. The cyclone separator (57) according to claim 1, wherein the cyclone structure (577) comprises at least two cyclone cylinders (578) arranged side by side, a cyclone chamber (578b) is formed in the cyclone cylinder (578), the cyclone cylinder (578) is provided with an airflow inlet (578a) communicating with the separation chamber (571a) and the cyclone chamber (578b), and the bracket (573) is provided with airflow outlets (578c) communicating with the cyclone chamber (578b);
further, an axis of the cyclone cylinder (578) is parallel to a first direction, and the at least two separation chambers (571a) are arranged sequentially in a second direction intersecting with the first direction.

3. The cyclone separator (57) according to claim 2, wherein the cyclone inlet (57e) is located on a side of the at least two separation chambers (571a) in the second direction, the at least two air inlet passages (571b) are located on two opposite sides of the separation chamber (571a) in a third direction, respectively, and the third direction intersects with the first direction and the second direction.

4. The cyclone separator (57) according to claim 2 or claim 3, wherein the cyclone separator (57) further comprises a top cover (574), the top cover (574) is disposed on the bracket (573) and located outside the separation chamber (571a), the top cover (574) and the bracket (573) enclose and form an air outlet chamber (571c), and the airflow outlets (578c) communicate with the air outlet chamber (571c); and
the base (572) is provided with a cyclone outlet (57c), and the bracket (573) is provided with an air passage hole (573d) communicating with the cyclone outlet (57c) and the air outlet chamber (571c);
further, an axis of the cyclone cylinder (578) is parallel to a first direction, and the top cover (574) and the base (572) are disposed on two opposite sides of the bracket (573) in the first direction, respectively; and
the cyclone outlet (57c) penetrates through the base (572) in the first direction.

5. The cyclone separator (57) according to claim 4, wherein the cyclone separator (57) further comprises at least two upper covers (575), the at least two upper covers (575) are disposed in the air outlet chamber (571c), and each upper cover (575) is disposed corresponding to one of the cyclone structures (577) and covers one of the airflow outlets (578c); and
the at least two upper covers (575) are provided with at least two first openings (575a) and at least two protruding rings (575b), respectively, each first opening (575a) is disposed corresponding to one of the airflow outlets (578c), an end of each protruding ring (575b) surrounds one of the first openings (575a), and the other end of each protruding ring (575b) passes through the corresponding airflow outlet (578c) and is inserted into the corresponding cyclone chamber (578b); and in a direction perpendicular to a first direction, a cross-sectional area of the protruding ring (575b) is less than a cross-sectional area of the cyclone cylinder (578).

6. The cyclone separator (57) according to any one of claims 1 to 5, wherein the base (572) is provided with the cyclone inlet (57e), and is provided with an airflow guide portion (572c) in an area corresponding to the cyclone inlet (57e), and in a direction from the cyclone inlet (57e) towards the airflow guide portion (572c), a cross-sectional dimension of the airflow guide portion (572c) gradually increases and the airflow guide portion (572c) extends towards the two adjacent air inlet passages (571b) to guide an airflow to divert into the two adjacent air inlet passages (571b);
further, the two adjacent air inlet passages (571b) respectively comprise adjacent passage walls (571b3) close to each other, the two adjacent passage walls (571b3) are connected to each other at an end thereof close to the cyclone inlet (57e), and are arranged at intervals relative to the cyclone inlet (57e); and the airflow guide portion (572c) is protrudingly disposed at a joint of the two adjacent passage walls (571b3).

7. The cyclone separator according to any one of claims 1 to 6, wherein the at least two isolated separation chambers (571a) comprise a first separation chamber (571a1) and a second separation chamber (571a2), and the first separation chamber (571a1) is closer to the cyclone inlet (57e) than the second separation chamber (571a2); and
the at least two air inlet passages (571b) comprise a first air inlet passage (571b1) and a second air inlet passage (571b2); the first air inlet passage (571b1) surrounds a portion of the first separation chamber (571a1) and communicates with a side of the first separation chamber (571a1) close to the second separation chamber (571a2); and the second air inlet passage (571b2) surrounds a portion of the first separation chamber (571a1) and communicates with a side of the second separation chamber (571a2) close to the first separation chamber (571a1).

8. A purifier (50), comprising:
a casing (51), the casing (51) being provided with an air duct (511), and an air inlet (512) and an air outlet (513) communicating with the air duct (511); and
the cyclone separator (57) according to any one of claims 1 to 7, the cyclone separator (57) being disposed in the air duct (511).

9. The purifier (50) according to claim 8, wherein the purifier (50) further comprises:
a filter element assembly (53), wherein the filter element assembly (53) is disposed in the air duct (511) and is located between the air inlet (512) and the air outlet (513), and the filter element assembly (53) comprises at least one filter element (534); and
the cyclone separator (57) is located between the air inlet (512) and the air outlet (513), and is located upstream of the at least one filter element (534); and preferably
the filter element assembly (53) comprises a primary filter element (531a), a medium efficiency filter element (531b), an activated carbon filter element (533a), a carbon-sandwiched cloth filter element (533b) and a high efficiency filter element (533c), and the primary filter element (531a), the medium efficiency filter element (531b), the activated carbon filter element (533a), the carbon-sandwiched cloth filter element (533b) and the high efficiency filter element (533c) are sequentially arranged along an air flow direction of the air duct (511).

10. The purifier (50) according to claim 9, wherein the cyclone separator (57) comprises a first surface (57a) and a second surface (57b) arranged opposite to each other in an air flow direction of the air duct (511), and the cyclone separator (57) further comprises a cyclone side wall (57d) connecting the first surface (57a) and the second surface (57a); and
the cyclone side wall (57d) is provided with a cyclone inlet (57e), and the second surface (57b) is provided with a cyclone outlet (57c).

11. The purifier (50) according to claim 10, wherein the purifier (50) further comprises a fan (59), the fan (59) is disposed in the air duct (511), and is located downstream of the filter element assembly (53) and cyclone separator (57);
the fan (59) comprises a first wall surface (591) and a fan side wall (593), the first wall surface (591) and the second surface (593) are arranged opposite to each other, and the fan side wall (593) is connected to the first wall surface (591); and
the first wall surface (591) is provided with a fan inlet (591a), and the fan side wall (593) is provided with a fan outlet (593a).

12. The purifier (50) according to claim 8, wherein the purifier (50) further comprises:
a filter element assembly (53), the filter element assembly (53) being disposed in the air duct (511), the filter element assembly (53) comprising a front filter element component (531) and a rear filter element component (533) sequentially arranged along an air flow direction of the air duct (511), the front filter element component (531) and the rear filter element component (533) comprising at least one filter element (534) respectively, and a filter hole of the filter element (534) in the front filter element component (531) being greater than a filter hole of the filter element (534) in the rear filter element component (533); and
a sealing structure (55), the sealing structure (55) being at least located between every two adjacent filter elements (534), and being annular in shape to enclose to form a first passage (551) communicating with the two adjacent filter elements.

13. The purifier (50) according to claim 12, wherein the filter element (534) has an air inlet side (535) and an air outlet side (537) arranged opposite to each other, and the sealing structure (55) comprises:
a first sealing member (552), the first sealing member (552) is annular in shape and is disposed on the air inlet side (535); and
a second sealing member (553), the second sealing member (553) is annular in shape and is disposed on the air outlet side (537), and the second sealing member (553) and the first sealing member (552) located at the two adjacent filter elements (534) abut against each other and cooperatively enclose and form the first passage (551); and preferably
in the air flow direction of the air duct (511), a thickness of the first sealing member (552) differs from a thickness of the second sealing member (553).

14. The purifier (50) according to claim 13, wherein the cyclone separator (57) is located between the air inlet (512) and the filter element (534) adjacent to the air inlet (512); the air inlet side (535) of the filter element (534) adjacent to the air inlet (512) is provided with the first sealing member (552), and the first sealing member (552) adjacent to the air inlet (512) abuts against the cyclone separator (57) to enclose and form a third passage (552a) communicating with the cyclone separator (57) and the filter element (534); and
the sealing structure (55) further comprises a third sealing member (554),
the third sealing member (554) is annular in shape and is provided on a side of the cyclone separator (57) facing to the filter element (534), the third sealing member (554) abuts against the first sealing member (552) adjacent to the cyclone separator (57) to enclose and form a fourth passage (554a) communicating with the cyclone separator (57) and the third passage (552a).

15. A laser processing system (100), comprising:
a laser processing device (10), the laser processing device (10) comprising a main body (110) and a laser head (13), the main body (110) being provided with a processing chamber (111) and an exhaust port (113) communicating with the processing chamber (111); and
the purifier (50) according to any one of claims 8 to 14, wherein the air inlet (512) of the purifier (50) communicates with the exhaust port (113).
